(19) Europäisches Patentamt
European Patent Office
Office européen des brevets

(11) **EP 4 597 065 A1**

(12) **EUROPEAN PATENT APPLICATION**
published in accordance with Art. 153(4) EPC

(43) Date of publication:
**06.08.2025 Bulletin 2025/32**

(21) Application number: **23872493.4**

(22) Date of filing: **27.09.2023**

(51) International Patent Classification (IPC):
***G01M 13/04*** *(2019.01)*

(52) Cooperative Patent Classification (CPC):
**G01M 13/04**

(86) International application number:
**PCT/JP2023/035317**

(87) International publication number:
**WO 2024/071271 (04.04.2024 Gazette 2024/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **30.09.2022 JP 2022158718**

(71) Applicant: **NSK LTD.**
**Tokyo 141-8560 (JP)**

(72) Inventor: **AOYAMA Juri**
**Fujisawa-shi, Kanagawa 251-8501 (JP)**

(74) Representative: **Grünecker Patent- und
Rechtsanwälte
PartG mbB
Leopoldstraße 4
80802 München (DE)**

(54) **ROLLING DEVICE DIAGNOSING METHOD, DIAGNOSING DEVICE, AND PROGRAM**

(57) This method for diagnosing a rolling device comprising rolling elements and peripheral members of the rolling elements includes: applying an alternating-current voltage to an electric circuit comprising the rolling elements and the peripheral members; measuring an impedance and a phase angle when the alternating-current voltage is applied; correcting the measured impedance and the measured phase angle using a correction formula based on a solution of Kirchhoff's laws, defined in accordance with a resistance and a reactance resulting from a wiring component in the electric circuit; and calculating a lubricating film thickness and a metal contact ratio on the basis of the corrected impedance and the corrected phase angle.

*FIG. 6*

**Description**

TECHNICAL FIELD

The present invention relates to a rolling device diagnostic method, a diagnostic device, and a program.

BACKGROUND ART

A rolling device such as a bearing is used in a wide range of industrial fields such as automobiles and various industrial machines. It is extremely important to grasp a lubrication state inside the rolling device from the viewpoint of smooth operation of the machine, securing the service life of the rolling device, and the like, and by appropriately grasping the lubrication state, maintenance such as supply of various lubricants (oil, grease, and the like) and replacement of the rolling device can be performed at an optimal timing without excess or deficiency. However, since it is difficult to directly visually observe the lubrication state, a method of monitoring vibration, sound, and an oil film state has been proposed as a rolling device diagnostic method.

For example, Patent Literature 1 discloses, as a method for diagnosing a lubrication state inside a rolling device, a method in which an AC power supply is applied to the rolling device to measure an impedance and a phase angle, thereby calculating a lubricating film thickness and a metal contact ratio.

CITATION LIST

PATENT LITERATURE

Patent Literature 1: Japanese Patent No. 6380720

SUMMARY OF INVENTION

TECHNICAL PROBLEM

It is possible to calculate the lubricating film thickness and the metal contact ratio by the method of Patent Literature 1. On the other hand, there is a problem that in the method of Patent Literature 1, the measurement accuracy may decrease under a condition in which the lubricating film thickness is assumed to be less than a certain value, such as a case where a rotational speed of the rolling device to be diagnosed is low.

In view of the above problem, an object of the present invention is to provide a method for diagnosing a lubrication state inside a rolling device more accurately than in the related art.

SOLUTION TO PROBLEM

In order to solve the above problem, the present invention has the following configuration. That is, a method for diagnosing a rolling device including a rolling element and a peripheral member of the rolling element, the method including:

applying an AC voltage to an electric circuit including the rolling element and the peripheral member;
measuring an impedance and a phase angle of the electric circuit when the AC voltage is applied;
correcting the measured impedance and the measured phase angle using a correction formula based on a solution of Kirchhoff s law defined corresponding to a resistance and a reactance by a wiring component in the electric circuit; and
calculating a lubricating film thickness and a metal contact ratio between the peripheral member and the rolling element based on the corrected impedance and the corrected phase angle.

In addition, another aspect of the present invention has the following configuration. That is, a device for diagnosing a rolling device including a rolling element and a peripheral member of the rolling element, the device including:

an acquisition unit configured to acquire an impedance and a phase angle of an electric circuit including the rolling element and the peripheral member when an AC voltage is applied to the electric circuit;
a correction unit configured to correct the acquired impedance and the acquired phase angle using a correction formula based on a solution of Kirchhoff s law defined corresponding to a resistance and a reactance by a wiring component in the electric circuit; and
a calculation unit configured to calculate a lubricating film thickness and a metal contact ratio between the peripheral member and the rolling element based on the corrected impedance and the corrected phase angle.

In addition, another aspect of the present invention has the following configuration. That is, a program that causes a computer to function as the following:

an acquisition unit configured to acquire an impedance and a phase angle of an electric circuit including a rolling element in a rolling device and a peripheral member of the rolling element when an AC voltage is applied to the electric circuit;

a correction unit configured to correct the acquired impedance and the acquired phase angle using a correction formula based on a solution of Kirchhoff s law defined corresponding to a resistance and a reactance by a wiring component in the electric circuit; and

a calculation unit configured to calculate a lubricating film thickness and a metal contact ratio between the peripheral member and the rolling element based on the corrected impedance and the corrected phase angle.

ADVANTAGEOUS EFFECTS OF INVENTION

With the present invention, it is possible to diagnose a lubrication state inside a rolling device more accurately than in the related art.

BRIEF DESCRIPTION OF DRAWINGS

[FIG. 1] FIG. 1 is a schematic diagram illustrating a configuration example of a system to which diagnosis processing according to an embodiment of the present invention may be applied.
[FIG. 2] FIG. 2 is a schematic diagram illustrating a contact region of a rolling bearing.
[FIG. 3] FIG. 3 is a circuit diagram illustrating an equivalent circuit around the contact region of the rolling bearing.
[FIG. 4] FIG. 4 is a circuit diagram illustrating an equivalent circuit of a rolling bearing in the related art.
[FIG. 5] FIG. 5 is a circuit diagram illustrating an equivalent circuit of the rolling bearing according to the embodiment of the present invention.
[FIG. 6] FIG. 6 is a flowchart of the diagnosis processing according to the embodiment of the present invention.
[FIGS. 7A and 7B] FIGS. 7A and 7B are diagrams illustrating a problem in a method in the related art.
[FIG. 8A] FIG. 8A is a graph illustrating a diagnostic result by the method in the related art.
[FIG. 8B] FIG. 8B is a graph illustrating a diagnostic result by a diagnostic method according to the embodiment of the present invention.
[FIG. 9A] FIG. 9A is a graph illustrating a comparison result between the diagnostic method according to the embodiment of the present invention and the method in the related art.
[FIG. 9B] FIG. 9B is a graph illustrating a comparison result between the diagnostic method according to the embodiment of the present invention and the method in the related art.

DESCRIPTION OF EMBODIMENTS

Hereinafter, embodiments of the present invention will be described with reference to the drawings. The embodiments described below are embodiments for explaining the present invention, and are not intended to be interpreted to limit the present invention, and all the configurations described in the embodiments are not necessarily essential configurations for solving the problem of the present invention. In the drawings, the same components are denoted by the same reference numerals, thereby illustrating a correspondence relationship therebetween.

<First Embodiment>

Hereinafter, a first embodiment of the present invention will be described. In the following description of a device configuration, a ball bearing is described as an example, but the present invention is not limited thereto, and can be applied to devices having other configurations. For example, the present invention is also applicable to a rolling bearing such as a rolling element (needle-like, conical, or cylindrical). In addition, without being limited to the rolling bearing, the present invention is generally applicable to a device having a configuration such as a ball screw, a linear guide, an actuator, a slide bearing, or an engine piston. Examples of such devices include move bodies such as automobiles, two-wheeled vehicles, and railway vehicles, industrial machines, and machine tools.

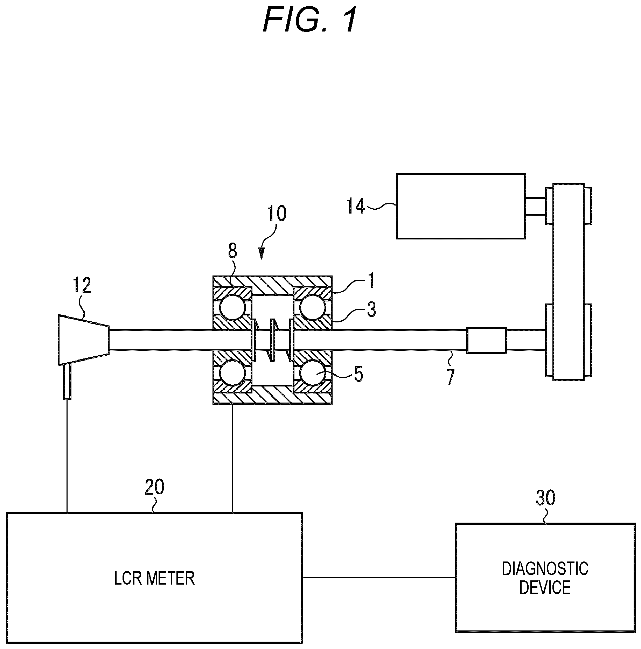

FIG. 1 is a schematic configuration diagram illustrating an example of an overall configuration when diagnosis is performed by a diagnostic device 30 that executes a diagnostic method according to the present embodiment. In FIG. 1, a bearing device 10 to which the diagnostic method according to the present embodiment is applied and the diagnostic device 30 that performs the diagnosis are provided. The configuration illustrated in FIG. 1 is an example, and different configurations may be used according to the configuration of the bearing device 10. Although a configuration in which the bearing device 10 includes two rolling bearings 8 is illustrated in FIG. 1, the present invention is not limited thereto, and the bearing device 10 may include a plurality of rolling bearings.

The bearing device 10 includes a ball bearing as the rolling bearing. In the bearing device 10, the rolling bearing 8 is provided around a rotary shaft 7 and rotatably supports the rotary shaft 7. A load is applied to the bearing device 10 in a predetermined direction by a load device (not illustrated). In the present embodiment, a radial load is applied by the load device in a direction orthogonal to the rotary shaft 7, but the direction of the load is not particularly limited.

The rolling bearing 8 includes an outer ring 1, an inner ring 3, a plurality of rolling elements 5 (balls in this example), and a cage (not illustrated) that rollably holds the rolling elements 5. Here, the outer ring 1 is a fixed ring, and the inner ring 3 is a rotating ring. Although not illustrated in FIG. 1, a shape of the cage is not particularly limited, and may change according to the shape of the rolling element 5, for example. In addition, a peripheral member of the rolling element 5 such as the outer ring 1 and the inner ring 3 may have different shapes, configurations of a rolling surface, and the like depending on the configuration of the rolling device. In the rolling bearing 8, friction between the outer ring 1 and the rolling element 5 and friction between the inner ring 3 and the rolling element 5 are reduced by a predetermined lubrication method. The lubrication method is not particularly limited, and for example, grease lubrication, oil lubrication, or the like is used and supplied to the inside of the rolling bearing 8. A type of a lubricant is also not particularly limited.

A motor 14 is a motor for driving, and supplies power by rotation to the rotary shaft 7. The rotary shaft 7 is connected to an LCR meter 20 via a rotating connector 12. The rotating connector 12 may be implemented using, for example, a carbon brush or a slip ring, but is not limited thereto. In addition, the rolling bearing 8 of the bearing device 10 is also electrically connected to the LCR meter 20, and at this time, the LCR meter 20 also functions as an AC power supply for the bearing device 10.

The diagnostic device 30 operates as a diagnostic device capable of executing the diagnostic method according to the present embodiment. At the time of diagnosis, the diagnostic device 30 instructs the LCR meter 20 to use, as inputs, an angular frequency $\omega$ of the AC power supply and an AC voltage V, and acquires, as outputs corresponding thereto, an impedance $|Z|$ ($|Z|$ is an absolute value of Z) and a phase angle $\theta$ of the bearing device 10 from the LCR meter 20. Then, the diagnostic device 30 performs diagnosis for the rolling device 10 using the above values. Details of the diagnostic method will be described later.

The diagnostic device 30 may be implemented by, for example, an information processing device including a control device, a storage device, and an output device, which are not illustrated. The control device may include a central processing unit (CPU), a micro processing unit (MPU), a digital single processor (DSP), and a dedicated circuit. The storage device includes volatile and nonvolatile storage media such as a hard disk drive (HDD), a read only memory (ROM), and a random access memory (RAM), and may input and output various kinds of information in response to an instruction from the control device. The output device includes a speaker, a light, or a display device such as a liquid crystal display, and performs notification to an operator in response to the instruction from the control device. A notification method by the output device is not particularly limited, and for example, may be an auditory notification by voice or a visual notification by screen output. The output device may be a network interface having a communication function, and may perform a notification operation by transmitting data to an external device (not illustrated) via a network (not illustrated). A notification content here is not limited to a notification when the abnormality is detected as a result of the diagnosis, but may include a notification indicating that the bearing device 10 is normal.

[Physical Model]

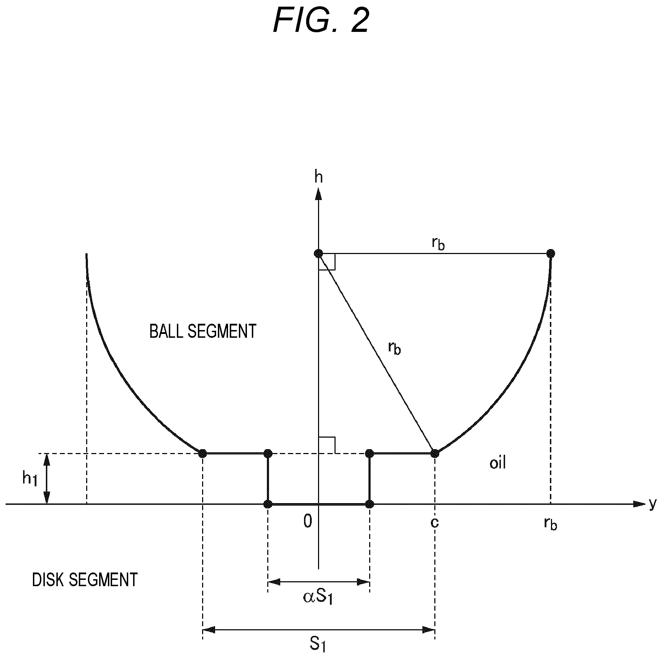

A contact state between the rolling element 5 and the outer ring 1 (or inner ring 3) in the bearing device 10 will be described with reference to FIG. 2. FIG. 2 is a graph illustrating a physical model when a ball segment and a disk segment are in contact with each other. The ball segment corresponds to the rolling element, and the disk segment corresponds to the outer ring 1 (or inner ring 3). An h axis indicates an oil film thickness (lubricating film thickness) direction, and a y axis indicates a direction orthogonal to the oil film thickness direction. The h axis represents a surface of the disk segment, and the y axis represents an axis passing through the center of the ball segment. Variables illustrated in FIG. 2 are as follows.

$S_1$: Hertzian contact area (Hertzian contact region)
c: Hertzian contact circle radius ($= \sqrt{S_1/\pi}$)
$\alpha$: breakage rate of oil film (metal contact ratio) ($0 \leq \alpha < 1$)
$r_b$: radius of ball segment
$\alpha S_1$: actual contact region (breakage region of oil film)
h: oil film thickness

$h_1$: oil film thickness in Hertzian contact region

In the Hertzian contact region, a ratio of a range in which metals are in contact with each other to a range in which the metals are not in contact with each other is $\alpha$: $(1 - \alpha)$. In an ideal state in which the ball segment and the disk segment are not in contact with each other, $\alpha = 0$, and when $y = 0$, $h > 0$.

The oil film thickness h illustrated in FIG. 2 is expressed by the following formulas.

$$h = 0 \ (-\alpha S_1/2 \le y \le \alpha S_1/2)$$

$$h = h_1 \ (-c \le y < -\alpha S_1/2 \text{ or } \alpha S_1/2 < y \le c)$$

$$h = h_1 + \sqrt{(r_b^2 - c^2)} - \sqrt{(r_b^2 - y^2)} \ (-r_b \le y < -c \text{ or } c < y \le r_b) \ \dots \ (1)$$

In an actual rolling bearing, since the rolling element 5 is elastically deformed when receiving a load, the rolling element 5 is not strictly spheres, but in the present embodiment, the rolling element 5 is assumed to be spheres and the above Formula (1) is used. Therefore, a formula used to acquire the oil film thickness is not limited to Formula (1), and other calculation formulas may be used. In the above description, the calculation is performed using a two-dimensional equation, but the calculation may be performed using a three-dimensional equation.

[Equivalent Electric Circuit]

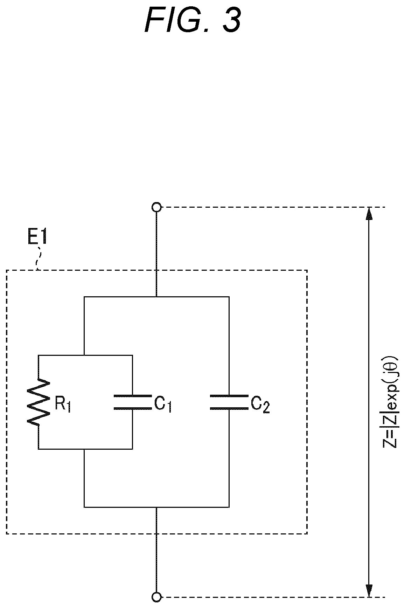

FIG. 3 is a diagram illustrating the physical model illustrated in FIG. 2 by an electrically equivalent electric circuit (equivalent circuit). An equivalent circuit E1 includes a resistance $R_1$, a capacitor $C_1$, and a capacitor $C_2$. The resistance $R_1$ corresponds to a resistance in a breakage region (= $\alpha S_1$). The capacitor $C_1$ corresponds to a capacitor formed by an oil film in the Hertzian contact region, and has a capacitance $C_1$. The capacitor $C_2$ corresponds to a capacitor formed by an oil film in the vicinity of the Hertzian contact region ($-r_b \le y < -c$ and $c < y \le r_b$ in FIG. 2), and has a capacitance $C_2$. The Hertzian contact region (= $S_1$) forms a parallel circuit of the resistance $R_1$ and the capacitor $C_1$ in the equivalent circuit E1 of FIG. 3. Further, the capacitor $C_2$ is connected in parallel to an electric circuit including the resistance $R_1$ and the capacitor $C_1$. At this time, it is assumed that the lubricant is filled in the vicinity of the Hertzian contact region ($-r_b \le y < -c$, and $c < y \le r_b$ in FIG. 2).

An impedance of the equivalent circuit E1 is denoted by Z. Here, an AC voltage V applied to the equivalent circuit E1, a current I flowing through the equivalent circuit E1, and a complex impedance Z of the entire equivalent circuit E1 are expressed by the following Formulas (2) to (4).

$$V = |V|\exp(j\omega t) \ \dots \ (2)$$

$$I = |I|\exp(j(\omega t - \theta)) \ \dots \ (3)$$

$$Z = V/I = |V/I|\exp(j\theta) = |Z|\exp(j\theta) \ \dots \ (4)$$

$j$: imaginary number
$\omega$: angular frequency of AC voltage
$t$: time
$\theta$: phase angle (shift in phase between voltage and current)

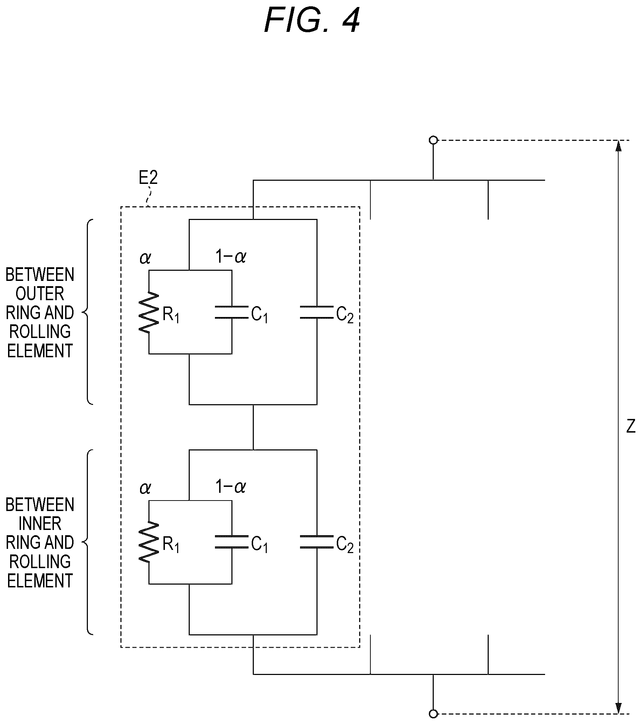

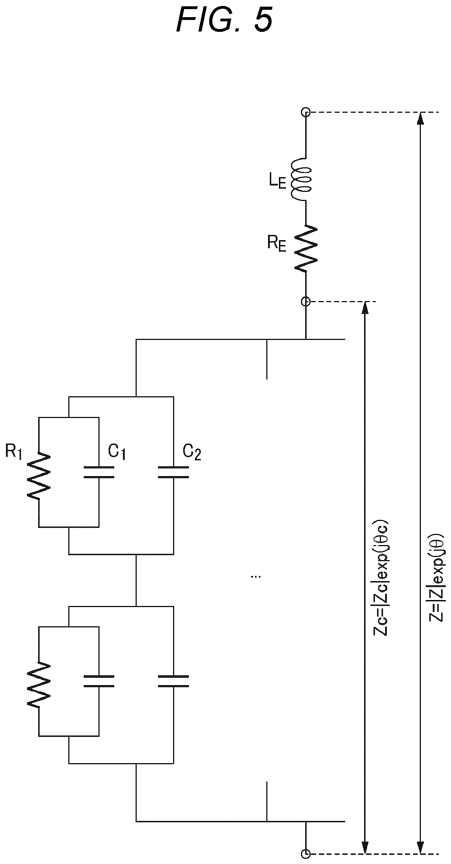

FIG. 4 is a diagram illustrating an electrically equivalent electric circuit around the rolling element 5 in FIG. 1 based on the equivalent circuit E1 illustrated in FIG. 3. Focusing on one rolling element 5, an equivalent circuit E2 is formed between the outer ring 1 and the rolling element 5 and between the inner ring 3 and the rolling element 5. Here, an electric circuit formed by the outer ring 1 and the rolling element 5 is located on an upper side, and an electric circuit formed by the inner ring 3 and the rolling element 5 is located on a lower side, and the locations may be reversed. Around one rolling element 5, these electric circuits are connected in series to form the equivalent circuit E2. Although only one equivalent circuit E2 is illustrated in FIG. 4 and FIG. 5, actually, the same number of equivalent circuits E2 as the number of rolling elements are connected in parallel.

[Method in Related Art]

Here, as a comparative example of the diagnostic method according to the embodiment of the present invention, Patent Literature 1 will be described as the method in the related art. Although detailed description is omitted, in Patent Literature 1, diagnosis is performed using the following Formulas (5) and (6) based on a model including the rolling element and the peripheral member thereof as described above.

[Math. 1]

$$h = \omega\varepsilon_1 S \left[ -\frac{n}{2} \left\{ \frac{(Z\sin\theta - \omega L)^2 + (Z\cos\theta - R)^2}{Z\sin\theta - \omega L} \right\} + R_{20}\left( \frac{Z\cos\theta - R}{Z\sin\theta - \omega L} \right) - \frac{Z\cos\theta_1 - R}{Z\sin\theta_1 - \omega L} \right]$$

$$\cdots \quad (5)$$

[Math. 2]

$$\alpha = \frac{2}{n} \frac{R_{20}}{(Z\sin\theta - \omega L)^2 + (Z\cos\theta - R)^2} \left\{ (Z\cos\theta - R) - \frac{(Z\cos\theta_1 - R)(Z\sin\theta - \omega L)}{Z\sin\theta_1 - \omega L} \right\}$$

$$\cdots \quad (6)$$

$h$: oil film thickness (corresponding to $h_1$ in FIG. 2)
$\alpha$: metal contact ratio
$\omega$: angular frequency of AC voltage
$\varepsilon_1$: dielectric constant of lubricant
$S$: average value of areas of contact ellipses when contact regions are approximated to contact ellipses
$n$: number of rolling elements (number of balls) of bearing device
$Z$: impedance of entire electric circuit
$\theta$: phase angle
$R_{20}$: resistance of metal contact portion in state where there is no oil film completely
$\theta_1$: phase angle in state where oil film is completely present (state where there is no contact region of metal portion)
$L$: inductance connected in series to bearing device
$R$: resistance connected in series to bearing device

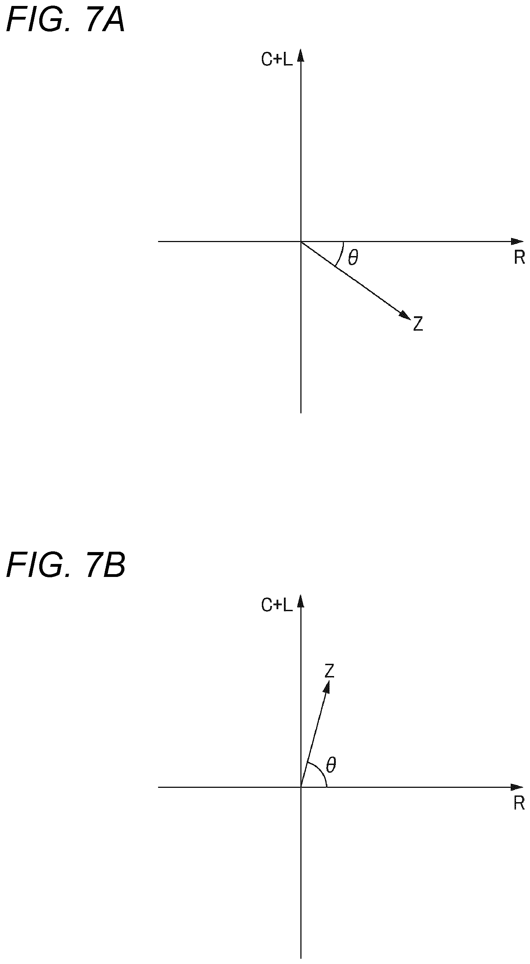

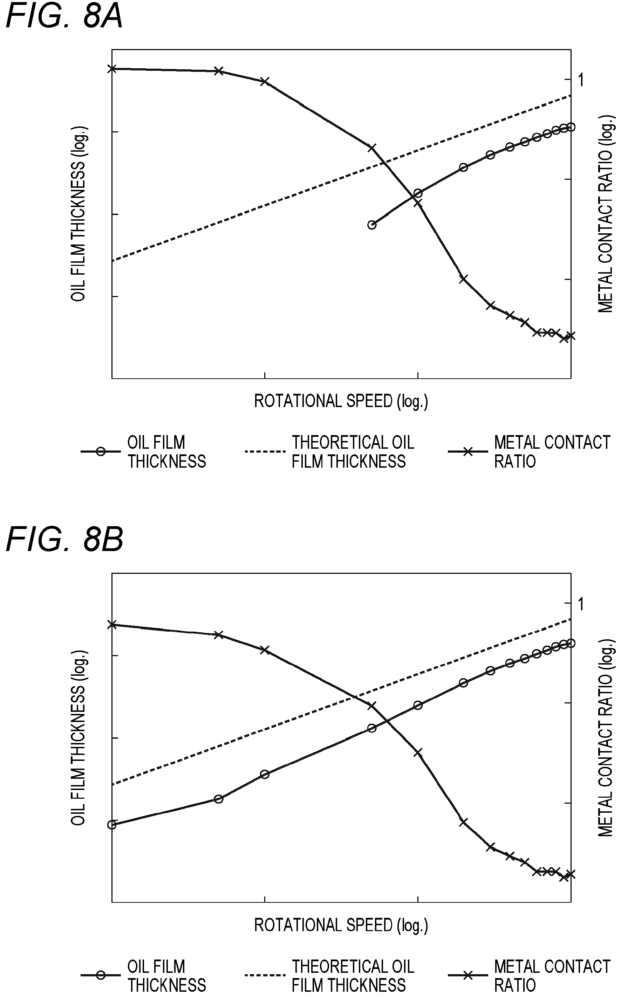

FIG. 8A is a graph illustrating a diagnostic result by the method in the related art. In FIG. 8A, the left vertical axis represents a logarithm of the oil film thickness, the right vertical axis represents a logarithm of the metal contact ratio, and the horizontal axis represents a logarithm of a rotational speed of a rotary shaft. A value of the horizontal axis increases toward the right. A broken line in FIG. 8A represents the approximate theoretical oil film thickness calculated using the known Hamrock-Dowson formula. According to the Hamrock-Dowson formula, the oil film thickness is proportional to the speed, and thus it is known that a straight line having a slope as illustrated in FIG. 8A is shown.
Referring to FIG. 8A, the oil film thickness increases and the metal contact ratio decreases as the rotational speed increases. When the rotational speed is lower than a certain value, the diagnostic result of the method in the related art tends to deviate from a value of the theoretical oil film thickness. When the rotational speed further decreases, there is an aspect that the oil film thickness cannot be calculated. When the rotational speed is lower than the certain value, the metal contact ratio rapidly increases, and an unreasonable value exceeding 1 is output.
One of the reasons why the measurement accuracy decreases (or cannot be calculated) when the rotary shaft is at a low speed as described above is considered to be related to the use of $\cos\theta$ as a main factor when the oil film thickness is obtained in the above Formulas (1) and (2) in the method of Patent Literature 1. That is, in the method of Patent Literature 1, an initial value and a measured value are used, and a ratio of $\cos\theta$ thereof is used.
In the case of the method in the related art, it is assumed that the impedance $Z$ and the phase angle $\theta$ are in the fourth quadrant as illustrated in FIG. 7A both when the rotary shaft is stopped (that is, initial value) and when the rotary shaft is operated (that is, measured value). In FIGS. 7A and 7B, the horizontal axis represents the resistance (R), and the vertical axis represents the reactance (C+L). In the fourth quadrant, the impedance $Z$ is positive and the phase angle $\theta$ is negative. In actual measurement, the impedance $Z$ and the phase angle $\theta$ may be in the first quadrant as illustrated in FIG. 7B. That is, a case where both the impedance $Z$ and the phase angle $\theta$ are positive is out of the applied condition ranges of the above Formulas (1) and (2). As a result, it is considered that the diagnostic result as illustrated in FIG. 8A is obtained.

[Diagnostic Method according to Present Embodiment]

The diagnostic method according to the present embodiment provides a diagnostic method with higher accuracy than the above-described method in the related art. In the present embodiment, attention is paid to a configuration of a diagnosis target, and a method considering a wiring structure thereof is used. At the time of performing diagnosis, for example, wiring of a certain length is required to connect a rolling device and an LCR meter. In the impedance method in the related art as illustrated in Patent Literature 1, a constant high-frequency AC voltage is used, and thus it is considered that there is an influence of the wiring. The present inventor has identified, by analysis or the like, that the impedance of the wiring component among the measured values is dominant particularly in a low-speed range in which the oil film is thin or an initial value measured when the rotary shaft is stopped. The wiring component here may also include, in addition to a wiring for connecting the rolling device and the LCR meter, a terminal contact (not illustrated) disposed on the wiring.

Therefore, the present inventor corrects parameters used in the method in the related art in consideration of the influence of the wiring so that the parameters out of the applicable condition range of Patent Literature 1 are corrected to be within the applicable range, thereby improving the diagnosis accuracy.

FIG. 5 is an electric circuit diagram in which wiring is further considered for the electric circuit described with reference to FIG. 4. As described above, the circuit to be measured includes a resistance $R_E$ and a reactance $L_E$ corresponding to the wiring and the terminal contact. Therefore, the value calculated by the above Formula (1) corresponds to the electric circuit indicated by Z in FIG. 5. In the present embodiment, $Z_c$ obtained by removing the components of the resistance $R_E$ and the reactance $L_E$ from Z is derived.

$$Z_C = |Z_C|\exp(j\theta_c) \dots (7)$$

In the present embodiment, a correction formula based on the solution of the Kirchhoff's law is used based on the electric circuit illustrated in FIG. 5. By this correction formula, it is possible to correct the impedance and the phase angle to the fourth quadrant as illustrated in FIG. 7A both when the rotary shaft is stopped (that is, initial value) and when the rotary shaft is operated (that is, measured value). As a result, the parameters after the correction can be within the applicable condition ranges of the above Formulas (5) and (6). The following Formulas (8) and (9) are used as correction formulas according to the present embodiment.

[Math. 3]

$$\theta_c = \tan^{-1}\left[\frac{|Z|\sin\theta - \omega L_E}{|Z|\cos\theta - R_E}\right] \quad \cdots \quad (8)$$

[Math. 4]

$$Z_c = \frac{|Z|\cos\theta}{\cos\theta_c} \quad \cdots \quad (9)$$

$\theta_C$: phase angle after correction
$Z_C$: impedance after correction
$R_E$: resistance corresponding to wiring component
$L_E$: reactance corresponding to wiring component

The correction formulas shown in the above Formulas (8) and (9) are examples, and the present invention is not limited thereto. When the electric circuit changes based on the configuration of the bearing device 10, the correction formula may also correspond to the change. For example, when the configuration of the bearing device 10 includes a journal bearing or a sliding portion having a lubricating film between two components such as a cylinder and a piston in addition to the bearing device of FIG. 1, the equivalent circuit as illustrated in FIG. 3 is added in series or in parallel to the equivalent circuits in FIGS. 4 and 5 according to the configuration of the bearing device 10. A correction formula may be created accordingly.

[Processing Flow]

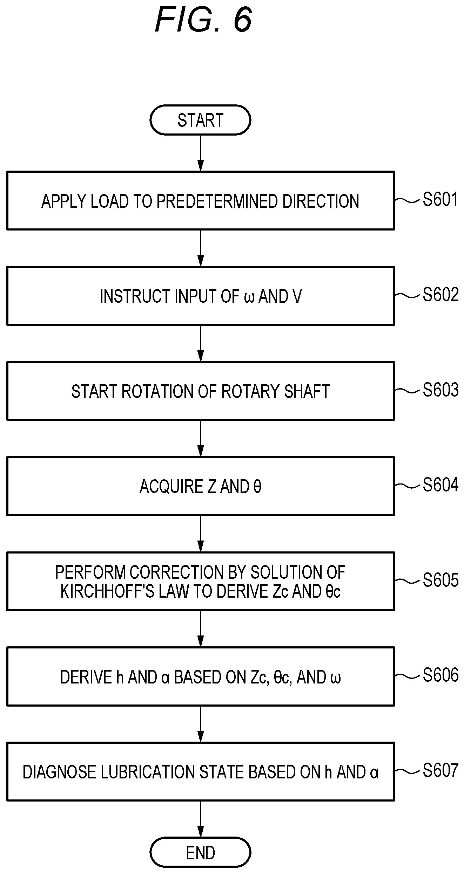

FIG. 6 is a flowchart of diagnosis processing according to the present embodiment. The processing is executed by the diagnostic device 30, and may be implemented by, for example, reading out a program for implementing the processing according to the present embodiment from the storage device (not illustrated) and executing the program by the control device (not illustrated) included in the diagnostic device 30.

In S601, the diagnostic device 30 performs control such that a load is applied to the bearing device 10 in a predetermined direction. Here, control is performed such that a radial load is applied to the rolling bearing 8 included in the bearing device 10. The control of applying the load to the bearing device 10 may be performed by a device other than the diagnostic device 30.

In step S602, the diagnostic device 30 controls the LCR meter 20 to supply the AC voltage of the angular frequency $\omega$ to the bearing device 10 by using an AC power supply (not illustrated) included in the LCR meter 20. Accordingly, the AC voltage of the angular frequency $\omega$ is applied to the bearing device 10.

In step S603, the diagnostic device 30 causes the motor 14 to start rotation of the rotary shaft 7. Accordingly, a rotation operation of the rolling bearing 8 is also started with the start of the rotary shaft 7. The motor 14 may be controlled by a device other than the diagnostic device 30.

In step S604, the diagnostic device 30 acquires the impedance Z and the phase angle $\theta$ from the LCR meter 20 as the output corresponding to the input in S603. That is, the LCR meter 20 outputs the impedance Z and the phase angle $\theta$ to the diagnostic device 30 as detection results of the bearing device 10 with respect to the AC voltage V and the angular frequency $\omega$ of the AC voltage which are inputs. The impedance Z and the phase angle $\theta$ acquired here include the components of the resistance $R_E$ and the reactance $L_E$ due to the wiring or the like, as described with reference to FIG. 5.

In S605, the diagnostic device 30 applies the impedance Z and the phase angle $\theta$ acquired in S604 to the above Formulas (8) and (9) to calculate the impedance $Z_C$ and the phase angle $\theta_C$ from which components due to wiring and the like are removed.

In S606, the diagnostic device 30 derives the oil film thickness h and the metal contact ratio $\alpha$ by applying, to Formulas (5) and (6), the impedance $Z_C$ and the phase angle $\theta_C$ calculated in S605, the angular frequency $\omega$ of the AC voltage used in S602, and dimensions of the bearing device 10 to be diagnosed.

In S607, the diagnostic device 30 diagnoses the lubrication state of the bearing device 10 by using the oil film thickness h and the metal contact ratio $\alpha$ derived in S606. In the diagnostic method here, for example, a threshold may be set for the oil film thickness h or the metal contact ratio $\alpha$ in advance, and the lubrication state may be determined based on comparison with the threshold. Then, the processing flow ends.

[Comparison of Diagnostic Results]

FIG. 8B is a graph illustrating a diagnostic result by the method according to the present embodiment. Corresponding to FIG. 8A, in FIG. 8B, the left vertical axis represents the logarithm of the oil film thickness, the right vertical axis represents the logarithm of the metal contact ratio, and the horizontal axis represents the logarithm of the rotational speed of the rotary shaft. The value of the horizontal axis increases toward the right. The broken line in FIG. 8B represents the approximate theoretical oil film thickness calculated using the known Hamrock-Dowson formula.

Referring to FIG. 8B, the oil film thickness increases and the metal contact ratio decreases as the rotational speed increases. Unlike the result of the method in the related art in FIG. 8A, the oil film thickness does not become uncalculable in the middle of calculation even when the rotational speed falls below a certain value, and may be calculated even in the stopped state. Even when the rotational speed falls below a certain value, an unreasonable value exceeding 1 is not output as the metal contact ratio.

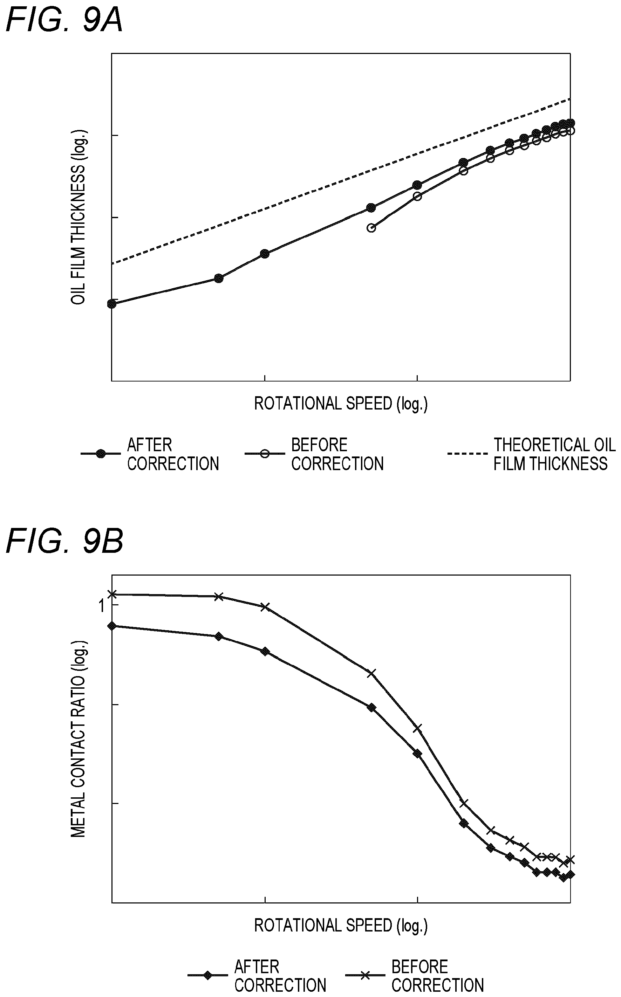

FIG. 9A is a log-log graph illustrating results of comparison of values of the oil film thickness extracted from FIGS. 8A and 8B. In FIG. 9A, the vertical axis represents the logarithm of the oil film thickness, and the horizontal axis represents the logarithm of the rotational speed. As described above, in a case where the correction is performed by the method according to the present embodiment, it is possible to calculate the oil film thickness even when the rotational speed falls below a certain value.

FIG. 9B is a log-log graph illustrating results of comparison of values of the metal contact ratio extracted from FIGS. 8A and 8B. In FIG. 9B, the vertical axis represents the logarithm of the metal contact ratio, and the horizontal axis represents the logarithm of the rotational speed. As described above, in a case where the correction is performed by the method according to the present embodiment, an unreasonable value exceeding 1 is not output even when the rotational speed falls below a certain value.

As described above, it is possible to diagnose, by the present embodiment, the lubrication state inside the rolling device more accurately than in the related art. In particular, when the rotational speed of the rotary shaft is low, the oil film thickness that cannot be calculated by the method in the related art can be calculated. In addition, when the rotational speed of the rotary shaft is low, it is possible to suppress calculation of an unreasonable value as in the method in the related art.

<Other Embodiments>

For example, the embodiments of the present invention are intended for a rolling device, but are not limited thereto. For example, diagnosis may be performed by creating an equivalent circuit and a correction for a mechanical device including only a sliding element having a lubricating film (for example, journal bearing or sliding element including cylinder and piston), and calculating a lubricating film thickness and a metal contact ratio.

**In** the present invention, a program or an application for implementing functions of the one or more embodiments described above may be supplied to a system or a device using a network or a storage medium, and a process in which one or more processors in a computer of the system or the device read and execute the program may be implemented.

**In** addition, it may be implemented by a circuit (for example, application specific integrated circuit (ASIC) or field programmable gate array (FPGA)) that implements one or more functions.

As described above, the present invention is not limited to the above-described embodiments, and combinations of the respective configurations of the embodiments and changes and modifications made by those skilled in the art based on the descriptions in the description and the well-known technique are intended by the present invention and are thus also included within the scope of the present invention to be protected.

As described above, the following matters are disclosed in the present description.

(1) A method for diagnosing a rolling device including a rolling element and a peripheral member of the rolling element, the method including:

applying an AC voltage to an electric circuit including the rolling element and the peripheral member;
measuring an impedance and a phase angle of the electric circuit when the AC voltage is applied;
correcting the measured impedance and the measured phase angle using a correction formula based on a solution of Kirchhoff s law defined corresponding to a resistance and a reactance by a wiring component in the electric circuit; and
calculating a lubricating film thickness and a metal contact ratio between the peripheral member and the rolling element based on the corrected impedance and the corrected phase angle.
With this configuration, it is possible to diagnose a lubrication state inside the rolling device more accurately than in the related art. **In** particular, when a rotational speed of a rotary shaft is low, the oil film thickness that cannot be calculated by the method in the related art can be calculated. In addition, when the rotational speed of the rotary shaft is low, it is possible to suppress calculation of an unreasonable value as in the method in the related art.

(2) The diagnostic method according to (1), in which

the correction formula is defined by the following formula.

[Math. 5]

$$\theta_c = \tan^{-1}\left[\frac{|Z|\sin\theta - \omega L_E}{|Z|\cos\theta - R_E}\right]$$

$$Z_c = \frac{|Z|\cos\theta}{\cos\theta_c}$$

θC: phase angle after correction
ZC: impedance after correction
RE: resistance by wiring component
LE: reactance by wiring component
θ: measured phase angle
ω: angular frequency of AC voltage
With this configuration, it is possible to calculate the impedance and the phase angle in consideration of the reactance LE and the resistance RE corresponding to the wiring component of the electric circuit.

(3) A device for diagnosing a rolling device including a rolling element and a peripheral member of the rolling element, the device including:

an acquisition unit configured to acquire an impedance and a phase angle of an electric circuit including the rolling element and the peripheral member when an AC voltage is applied to the electric circuit;

a correction unit configured to correct the acquired impedance and the acquired phase angle using a correction formula based on a solution of Kirchhoff s law defined corresponding to a resistance and a reactance by a wiring component in the electric circuit; and

a calculation unit configured to calculate a lubricating film thickness and a metal contact ratio between the peripheral member and the rolling element based on the corrected impedance and the corrected phase angle. With this configuration, it is possible to diagnose a lubrication state inside the rolling device more accurately than in the related art. In particular, when a rotational speed of a rotary shaft is low, the oil film thickness that cannot be calculated by the method in the related art can be calculated. In addition, when the rotational speed of the rotary shaft is low, it is possible to suppress calculation of an unreasonable value as in the method in the related art.

(4) A program that causes a computer to function as the following:

an acquisition unit configured to acquire an impedance and a phase angle of an electric circuit including a rolling element in a rolling device and a peripheral member of the rolling element when an AC voltage is applied to the electric circuit;

a correction unit configured to correct the acquired impedance and the acquired phase angle using a correction formula based on a solution of Kirchhoff s law defined corresponding to a resistance and a reactance by a wiring component in the electric circuit; and

a calculation unit configured to calculate a lubricating film thickness and a metal contact ratio between the peripheral member and the rolling element based on the corrected impedance and the corrected phase angle. With this configuration, it is possible to diagnose a lubrication state inside the rolling device more accurately than in the related art. In particular, when a rotational speed of a rotary shaft is low, the oil film thickness that cannot be calculated by the method in the related art can be calculated. In addition, when the rotational speed of the rotary shaft is low, it is possible to suppress calculation of an unreasonable value as in the method in the related art.

Although various embodiments have been described above, it is needless to say that the present invention is not limited to these examples. It is apparent to those skilled in the art that various changes or modifications can be conceived within the scope described in the claims, and it is understood that the changes or modifications naturally fall within the technical scope of the present invention. In addition, the components described in the above embodiments may be combined in any manner without departing from the gist of the invention.

The present application is based on a Japanese patent application (No. 2022-158718) filed on September 30, 2022, contents of which are incorporated herein by reference.

REFERENCE SIGNS LIST

1: outer ring
3: inner ring
5: rolling element
7: rotary shaft
10: bearing device (rolling device)
12: rotating connector
14: motor
20: LCR meter
30: diagnostic device

**Claims**

1. A method for diagnosing a rolling device including a rolling element and a peripheral member of the rolling element, the method comprising:

applying an AC voltage to an electric circuit including the rolling element and the peripheral member;
measuring an impedance and a phase angle of the electric circuit when the AC voltage is applied;
correcting the measured impedance and the measured phase angle using a correction formula based on a solution of Kirchhoff s law defined corresponding to a resistance and a reactance by a wiring component in the electric circuit; and

calculating a lubricating film thickness and a metal contact ratio between the peripheral member and the rolling element based on the corrected impedance and the corrected phase angle.

2.  The diagnostic method according to claim 1, wherein

the correction formula is defined by the following formula.

[Math. 1]

$$\theta_c = \tan^{-1}\left[\frac{|Z|\sin\theta - \omega L_E}{|Z|\cos\theta - R_E}\right]$$

$$Z_c = \frac{|Z|\cos\theta}{\cos\theta_c}$$

$\theta_C$: phase angle after correction
$Z_C$: impedance after correction
$R_E$: resistance by wiring component
$L_E$: reactance by wiring component
$\theta$: measured phase angle
$\omega$: angular frequency of AC voltage

3.  A device for diagnosing a rolling device including a rolling element and a peripheral member of the rolling element, the device comprising:

an acquisition unit configured to acquire an impedance and a phase angle of an electric circuit including the rolling element and the peripheral member when an AC voltage is applied to the electric circuit;
a correction unit configured to correct the acquired impedance and the acquired phase angle using a correction formula based on a solution of Kirchhoff s law defined corresponding to a resistance and a reactance by a wiring component in the electric circuit; and
a calculation unit configured to calculate a lubricating film thickness and a metal contact ratio between the peripheral member and the rolling element based on the corrected impedance and the corrected phase angle.

4.  A program that causes a computer to function as the following:

an acquisition unit configured to acquire an impedance and a phase angle of an electric circuit including a rolling element in a rolling device and a peripheral member of the rolling element when an AC voltage is applied to the electric circuit;
a correction unit configured to correct the acquired impedance and the acquired phase angle using a correction formula based on a solution of Kirchhoff s law defined corresponding to a resistance and a reactance by a wiring component in the electric circuit; and
a calculation unit configured to calculate a lubricating film thickness and a metal contact ratio between the peripheral member and the rolling element based on the corrected impedance and the corrected phase angle.

# FIG. 1

LCR METER

DIAGNOSTIC
DEVICE

# FIG. 2

# FIG. 3

E1

$R_1$  $C_1$  $C_2$

$Z=|Z|\exp(j\theta)$

# FIG. 4

# FIG. 5

## FIG. 6

```
                    ┌─────────────┐
                    │    START    │
                    └──────┬──────┘
                           │
                           ▼
        ┌──────────────────────────────────────────┐
        │   APPLY LOAD TO PREDETERMINED DIRECTION   │──── S601
        └────────────────────┬─────────────────────┘
                             │
                             ▼
        ┌──────────────────────────────────────────┐
        │         INSTRUCT INPUT OF ω AND V         │──── S602
        └────────────────────┬─────────────────────┘
                             │
                             ▼
        ┌──────────────────────────────────────────┐
        │       START ROTATION OF ROTARY SHAFT      │──── S603
        └────────────────────┬─────────────────────┘
                             │
                             ▼
        ┌──────────────────────────────────────────┐
        │              ACQUIRE Z AND θ              │──── S604
        └────────────────────┬─────────────────────┘
                             │
                             ▼
        ┌──────────────────────────────────────────┐
        │    PERFORM CORRECTION BY SOLUTION OF      │
        │  KIRCHHOFF'S LAW TO DERIVE Zc AND θc      │──── S605
        └────────────────────┬─────────────────────┘
                             │
                             ▼
        ┌──────────────────────────────────────────┐
        │     DERIVE h AND α BASED ON Zc, θc, AND ω │──── S606
        └────────────────────┬─────────────────────┘
                             │
                             ▼
        ┌──────────────────────────────────────────┐
        │ DIAGNOSE LUBRICATION STATE BASED ON h AND α│──── S607
        └────────────────────┬─────────────────────┘
                             │
                             ▼
                    ┌─────────────┐
                    │     END     │
                    └─────────────┘
```

## FIG. 7A

## FIG. 7B

## FIG. 8A

ROTATIONAL SPEED (log.)

⊸○⊸ OIL FILM
THICKNESS

----- THEORETICAL OIL
FILM THICKNESS

⊸✕⊸ METAL CONTACT
RATIO

## FIG. 8B

ROTATIONAL SPEED (log.)

⊸○⊸ OIL FILM
THICKNESS

----- THEORETICAL OIL
FILM THICKNESS

⊸✕⊸ METAL CONTACT
RATIO

## FIG. 9A

OIL FILM THICKNESS (log.)

ROTATIONAL SPEED (log.)

●——— AFTER CORRECTION    ○——— BEFORE CORRECTION    ------ THEORETICAL OIL FILM THICKNESS

## FIG. 9B

METAL CONTACT RATIO (log.)

1

ROTATIONAL SPEED (log.)

◆——— AFTER CORRECTION    ✕——— BEFORE CORRECTION

## INTERNATIONAL SEARCH REPORT

| International application No. |
| --- |
| **PCT/JP2023/035317** |

**A. CLASSIFICATION OF SUBJECT MATTER**

*G01M 13/04*(2019.01)i
FI: G01M13/04

According to International Patent Classification (IPC) or to both national classification and IPC

**B. FIELDS SEARCHED**

Minimum documentation searched (classification system followed by classification symbols)

G01M13/04; F16C19/52; F16N29/00-29/04; G01N27/06; F01M11/10

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | MARUYAMA, Taisuke et al. Lubrication Condition Monitoring of Practical Ball Bearings by Electrical Impedance Method. Tribology Online. vol. 14, no. 5, 15 December 2019, pp. 327-338, DOI:10.2474/trol.14.327<br>"2 Measurement principle", "5.1 Validation of measured h-values", "6 Conclusions", fig. 2, 3 | 1-4 |
| A | JP 2020-193968 A (NSK LTD) 03 December 2020 (2020-12-03) | 1-4 |
| A | JP 63-290936 A (HONEYWELL INC) 28 November 1988 (1988-11-28) | 1-4 |
| A | 丸山　泰右, 転がり軸受の潤滑状態モニタリングに関する研究　一電気インピーダンス法の開発一, 学位論文, 横浜国立大学, 26 March 2019, pp. 125-131, DOI:10.18880/00012649, (Study on Lubrication Condition Monitoring of Rolling Bearings -Development of Electrical Impedance Method-), non-official translation (MARUYAMA, Taisuke. Thesis. Yokohama National University.)<br>pp. 125-131 | 1-4 |

☐ Further documents are listed in the continuation of Box C.  ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **28 November 2023** | **26 December 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

| INTERNATIONAL SEARCH REPORT | | | | International application No. |
|---|---|---|---|---|
| Information on patent family members | | | | **PCT/JP2023/035317** |

| Patent document cited in search report | | | Publication date (day/month/year) | Patent family member(s) | | | Publication date (day/month/year) |
|---|---|---|---|---|---|---|---|
| JP | 2020-193968 | A | 03 December 2020 | (Family: none) | | | |
| JP | 63-290936 | A | 28 November 1988 | US | 5001435 | A | |
| | | | | EP | 288940 | A2 | |
| | | | | DE | 3867893 | A | |
| | | | | CA | 1304129 | A | |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6380720 B
- JP 2022158718 A